# EUROPEAN PATENT SPECIFICATION

(11) **EP 3 764 523 B1**
(45) Date of publication and mention of the grant of the patent: **20.09.2023**
(21) Application number: 19185549.3
(22) Date of filing: 10.07.2019
(51) Int. Cl.: H02K 5/20, H02K 7/14, H02K 7/18, H02K 9/06, H02K 9/14, F02K 5/00

(54) **ELECTRIC MACHINE WITH INTEGRATED COOLING SYSTEM**
ELEKTRISCHE MASCHINE MIT INTEGRIERTEM KÜHLSYSTEM
MACHINE ÉLECTRIQUE AVEC SYSTÈME DE REFROIDISSEMENT INTÉGRÉ

(43) Date of publication of application: 13.01.2021
(73) Proprietor: Airbus Operations GmbH, 21129 Hamburg (DE)
(72) Inventor: SCHÖLL, Robert, 82024 Taufkirchen (DE)
(74) Representative: Isarpatent

(56) References cited:
- EP-A1- 2 757 666
- DE-A1-102014 117 962
- JP-A- S58 222 755
- US-A1- 2019 131 842

## Description

### FIELD OF THE INVENTION

The present invention pertains to electric machines with integrated cooling systems for cooling parts of the machine and/or power electronics components for controlling the machine. Such electric machines may be employed in housings with ducted fans, for example as electric propulsion unit in a nacelle of a propulsion turbine of an airborne vehicle, as Boundary Layer Ingestion (BLI) propulsion unit in fuselage portions of fuselage-integrated engines or as electric generator in a nacelle of a wind turbine.

Although applicable for any kind of airborne vehicle, the present invention and the corresponding underlying problems will be explained in further detail in conjunction with an aircraft. Airborne vehicles within the meaning of this disclosure include all types of vehicles that may be propelled through the air by force and/or supported by aerodynamic forces.

### BACKGROUND OF THE INVENTION

Electric machines and their components heat up during their operation due to internal losses such as electrical and mechanical losses. Such internal losses lead to elevations in temperature of windings of the electric machine, thereby predominantly contributing to a limitation of the machine rating. Thus, it is desirable to keep the temperature of various components of the machine, and specifically the windings in the machine, under a temperature threshold for enhanced machine efficiency.

For heat to be removed from their source of generation, one of the most efficient methods is to cool the machine components convectively by means of a circulating or bypassing cooling medium, such as air. Air cooling as one of the simplest and easiest methods is usually sufficiently effective and may be guaranteed by forcing or guiding circulation of air around the components that are sources of heat. Eventually, additional cooling by cooling media with higher density and specific heat capacity, such as silicon oils with low electric conductivity, may be employed on top of the air cooling.

There are many possible ways to provide air cooling to electric machines due to the ease with which heat can be transported convectively. However, conventional installations of cooling systems are not well integrated into the remainder of the machine architecture. Specifically, for high power electric propulsion systems installations of cooling systems do not integrate closely with the components of the machine that are sources of heat generation.

Documents FR 3 006 996 A1 discloses an electric propulsion assembly for an aircraft comprising a pod in which an electrical propulsion unit is disposed. Between the electric propulsion unit and the pod walls, a duct is defined for creating a cooling airflow when a fan of the electrical propulsion unit creates thrust for the aircraft. Document DE 10 2014 117 962 A1 discloses an electric propulsion system with an electric machine having a rotor with a hollow interior through which a cooling medium may be guided for convective cooling of parts of the rotor. Document US 2019/0131842 A1 discloses a corona shield used for electrical applications, such as generators. Document JP S58-222755 A discloses a vent guide plate having a predefined angle inclination to a vent guide in a suction chamber of a rotary electric machine. Document EP 2 757 666 A1 discloses an electric machine with a stator and a cylindrical rotor arranged inside the stator, which are arranged in a housing with a gap between stator and rotor.

However, there is a need for improved and space-saving solutions for cooling systems of electric machines that allow for integration into a nacelle in order to protect the cooling system from mechanical damage.

### SUMMARY OF THE INVENTION

According to a first aspect of the invention, an electric machine with an integrated convective cooling system comprises a machine housing having cylindrical outer walls, the outer walls including a stator portion at the front and a cooling system portion at the back, the cooling system portion lying axially adjacent to the stator portion. The electric machine further includes a rotor drive shaft protruding coaxially with the cylindrical outer walls of the electric machine from the front of the electric machine, and a hollow rotor coupled to the rotor drive shaft and arranged coaxially within the stator portion of the cylindrical outer walls of the machine housing. At least one air inlet is formed in the cylindrical outer walls of the machine housing axially between the stator portion and the cooling system portion. At least one partially tubular air guide vane extends from the air inlet into the hollow rotor, the at least one air guide vane forming a cooling air duct for an airflow that can enter the air inlet, pass along a radially inner surface of the rotor facing a radially outer surface of the air guide vane, reach an axial end of the air guide vane, turn by 180°, pass along a radially inner surface of the air guide vane and flow back to a radially inner surface of the cooling system portion.

According to a second aspect of the invention, an electric propulsion system for an airborne vehicle comprises an engine nacelle, a propeller fan installed in the engine nacelle and an electric machine according to the first aspect of the invention. The electric machine is operable as an electric motor. A fan shaft is coupled to the propeller fan, the rotor drive shaft of the electric machine being connected to the fan shaft.

According to a third aspect of the invention, an airborne vehicle comprises an electric propulsion system according to the second aspect of the invention.

According to a fourth aspect of the invention, an electric energy generation system for a wind turbine comprises an engine nacelle, a turbine fan installed in the engine nacelle, and an electric machine according to the first aspect of the invention. The electric machine is operable as an electric generator. A fan shaft is coupled to the turbine fan, the rotor drive shaft of the electric machine being connected to the fan shaft.

One idea of the present invention is to form a convective cooling system integrated into an electric machine so that the diameter of the cooling system is not larger than the machine itself. This has the tremendous advantage that a fan propelling or being propelled by the electric machine is not burdened by additional drag. If the electric machine is operated as an electric motor in a high velocity airborne vehicle, such absence of additional drag allows for the most energy efficient operation of the airborne vehicle. Additionally, podded engines in an under-wing configuration largely avoid ground clearance issues when the engine diameter is kept small.

As the integrated cooling system is advantageously located in the aft portion of the machine, the housing of the machine may at least partially shield a heat exchanger of the cooling system from impact damage, such as for example hail or bird strikes.

The configuration of the electric machine is closed in the front and open in the back so that cooling of the rotor is provided for from the back. With this configuration, this can be easily provisioned for: some cooling air for rotor cooling is tapped off close to the heat exchanger, where the majority of cooling air is routed. In this particular case, advantage may be taken of the open volume inside and/or behind the rotor by installing cooling equipment inside and/or closely behind the rotor volume. For example, a liquid reservoir for holding a heat exchanger fluid may be put in this area. Such a liquid reservoir may be advantageously designed to have an outer shape favourable for providing air flow conduit within the rotor volume. As an alternative example, fluid pumping equipment for the heat exchanger may be arranged inside and/or closely behind the rotor volume, particularly if such fluid pumping equipment is very heavy - in such cases, most of the mass of the cooling system may be concentrated roughly in the centre of mass of the electric machine so that undesirably long lever arms may be avoided.

One of the advantages of the invention is that both mechanical as well as air interfaces are simplified in their geometry for the electric machine. As the machine housing needs to be connected to the fan case and the rotor drive shaft coupled to the fan shaft, the only mechanical interface is at the front of the machine. In contrast, the air interfaces are concentrated in the rear part of the machine housing only, with a radial inlet and an axial outlet. Since the cooling system is entirely contained within the electric machine, there is no need for an additional potentially complicated liquid coolant interface.

According to some embodiments of the electric machine, the electric machine may further comprise a heat exchanger integrated into the outer walls of the cooling system portion. In some embodiments, the heat exchanger may include radially or diagonally oriented airflow deflectors. This advantageously allows air to stream through the outer walls of cooling system portion in the location of the heat exchanger.

According to further embodiments of the electric machine, the heat exchanger may be integrated into at least one ring segment of the cylindrical outer walls of the cooling system portion. In some embodiments, the at least one ring segment may span over between about 90° and about 360° of the cylindrical outer walls.

According to some embodiments of the electric machine, the electric machine may further comprise an airflow separation baffle member located concentrically with the outer walls of the cooling system portion within the cooling system portion. In some embodiment, the airflow separation baffle member may form an airflow ring between the outer surface of the airflow separation baffle member and the inner surface of the outer walls of the cooling system portion.

According to some embodiments of the electric machine, this airflow separation baffle member may protrude at least partially into the hollow rotor.

According to some embodiments of the electric machine, this airflow separation baffle member may enclose a liquid reservoir configured to hold a heat exchanger fluid. The heat exchanger fluid may for example be an appropriate liquid coolant medium.

According to some embodiments of the electric machine, the machine housing may include an axial airflow outlet at the back of the cylindrical outer walls.

According to some embodiments of the electric propulsion system or the electric energy generation system, the systems may include a core housing installed within the engine nacelle. In some embodiments, the core housing may form a first airflow duct between the inner surface of the engine nacelle and the outer surface of the core housing and a second airflow duct between the inner surface of the core housing and the outer surface of the machine housing of the electric machine.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a cross-sectional view of an engine nacelle of an electric propulsion system having an electric machine according to some embodiments of the invention.
Fig. 2 schematically illustrates a cross-sectional view of an electric machine according to other embodiments of the invention that could be used in an electric propulsion system as shown in Fig. 1.
Fig. 3 schematically illustrates a cross-sectional view of an electric machine according to other embodiments of the invention that could be used in an electric propulsion system as shown in Fig. 1.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

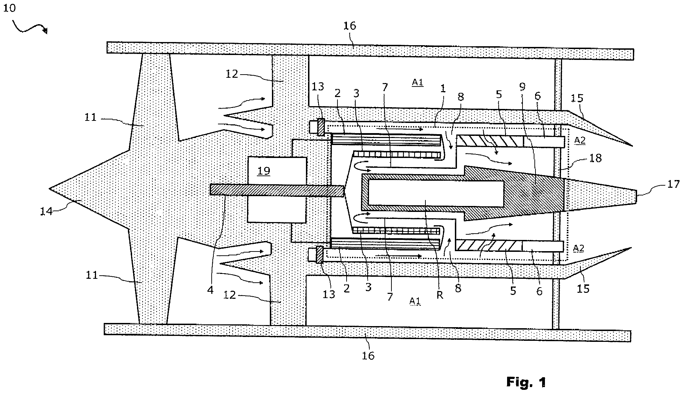

Fig. 1 shows a schematic illustration of a cross-sectional view through an engine nacelle 16. The engine nacelle 16 may be that of an electric propulsion system 10 having an electric machine 1. Alternatively, the electric machine 1 may be part of an electric energy generation system 10 and the engine nacelle 16 may be a wind turbine nacelle. The electric machine 1 may be operated as an electric motor, i.e. an electrical machine that converts electrical energy into mechanical energy. The electric machine 1 may also be operated as an electric generator, i.e. an electrical machine operating in the reverse direction to an electric motor, thereby converting mechanical energy into electrical energy.

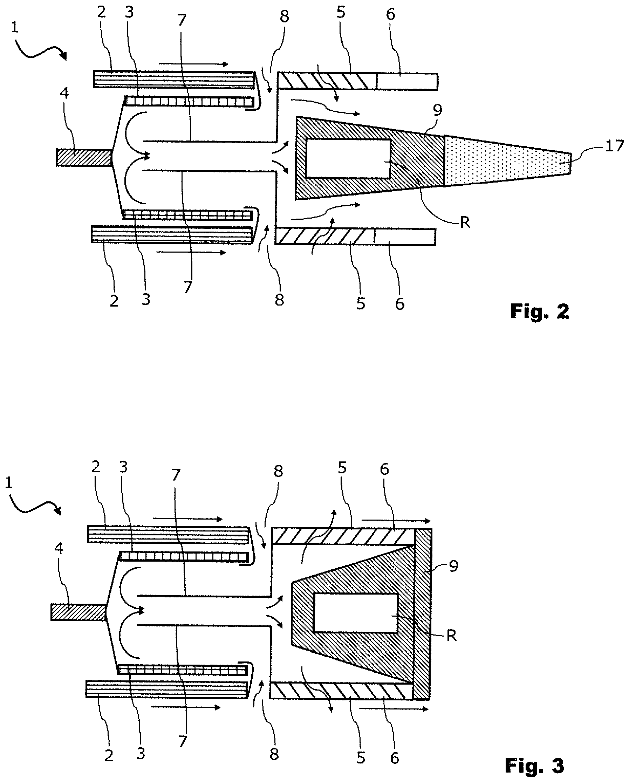

Figs. 2 and 3 show alternative variations of the electric machine 1 that may be used as a core component within the engine nacelle 16 of the electric propulsion system 10 or the electric energy generation system 10 instead of the electric machine 1 explicitly shown in Fig. 1. It should be understood that distinct features of the variations shown in Fig. 2 and 3 may be incorporated in the electric machine 1 of Fig. 1 and vice versa. Combinations of features taken from one of the Figs. 2 or 3 with other features taken from the electric machine of Fig. 1 may be used as well.

The electric machine 1 generally includes a machine housing having cylindrical outer walls. These outer walls include a stator portion 2 at the front (without limitation of generality shown to the left-hand side of the drawings) and a cooling system portion 6 at the back (without limitation of generality shown to the righthand side of the drawings). The cooling system portion 6 lies adjacent to the stator portion 2, i.e. the cooling system portion 6 and the stator portion 2 are part of a commonly formed cylindrical shell, only interrupted by one or more air inlets 8 formed within the outer walls of the machine housing between the stator portion 2 and the cooling system portion 6.

The stator portion 2 may have stator coils or stator windings to be connected to an electric energy storage 19 of the system 10. The electric machine 1 is formed in an in-runner configuration, meaning that there is a rotor 3 coupled to a rotor drive shaft 4, the rotor 3 being generally arranged coaxially within the hollow defined by the stator portion 2 of the machine housing. The rotor 3 may also have magnets, magnetizable coils or windings as appropriate for the type of electric machine.

The rotor drive shaft 4 protrudes coaxially with the cylindrical outer walls of the electric machine 1 from the front of the electric machine 1. This rotor drive shaft 4 may be coupled to a fan shaft connecting to a turbine fan 11 (in case of a wind turbine) or a propeller fan 11 (in case of an electric propulsion system for an aircraft) mounted to a fan rotor hub 14. The propeller or turbine fan 11 may be held in place by support members 12, for example a combined fan stator and support struts, structurally coupling a core housing 15 within the engine nacelle 16. The core housing 15 serves to encapsulate the engine 1 within the nacelle 16. The core housing 15 forms a first airflow duct A1 between the inner surface of the engine nacelle 16 and the outer surface of the core housing 15. A second airflow duct A2 leads between the inner surface of the core housing 15 and the outer surface of the machine housing of the electric machine 1. The dimensioning of the core housing 15 in relation to the machine housing of the electric machine on one hand and the nacelle 16 on the other hand may be chosen such that the ratio between the amount of air passing through the first and second airflow duct, respectively, is controlled as desired. Moreover, there may be adjustable nozzles (not explicitly shown in Fig. 1) installed at or in the support structure 12 so that the ratio between airflow through the two airflow ducts A1 and A2 may be adjusted as desired. It may also be possible to provide an at least partial or complete blockage of the airflow duct A2 at the end of the passage between the cooling system portion 6 and the core housing so that most of the air or all air flowing through the airflow duct A2 is forced through the heat exchanger 5. This could be arranged for by providing ring-shaped blockage elements on the support structure element 18 which interconnects the core housing, the nacelle 16 and the cooling system portion 6 at its aft end. The ring-shaped blockage elements may be partially open for an airflow streaming through or may entirely shut off the outlet between the outer surface of the cooling system portion 6 and the inner surface of the core housing 15 at the aft end of the electric machine Additionally, blower elements 13 may be provided in the airflow duct A2 which act as an airflow booster for air streaming through the airflow duct A2.

Air streaming through the second airflow duct A2 passes on the outside of the machine housing and partially streams radially through the one or more air inlets 8. This partial stream serves as cooling airflow for the rotor. It is guided towards the front past the rotor and cools the rotor components on its way. To that end, there is at least one air guide vane 7 that extends from the air inlet 8 into a hollow volume of the rotor 3. The air guide vane 7 forms a cooling air duct from the air inlet 8 past the inner surface of the rotor 3 and back to the inner surface of the cooling system portion 6. The airflow, having reached the end of the air guide vane 7 within the hollow volume of the rotor 3, is turned by 180° and flows to the back until it reaches the cooling system portion 6.

A heat exchanger 5 is integrated into the outer walls of the cooling system portion 6. The main cooling air flow may enter the heat exchanger 5 from the outside surface of the outer walls of the machine housing may join the rotor cooling airflow to leave the assembly axially through the rear at an axial airflow outlet at the back of the cylindrical outer walls of the machine housing. The heat exchanger 5 may also be split in two or more distinct cooling loops for different components. For example, a first cooling loop of the heat exchanger 5 may be used for cooling the stator parts of the electric machine 1 with a first cooling fluid, while a second cooling loop of the heat exchanger 5 may be used for cooling power electronics components using a second cooling fluid of different type than the first cooling fluid. Further cooling loops may also be used for other heat sources such as the electric energy storage 19 of Fig. 1.

As most of the heat dissipation may be expected to happen in the stator and/or in power electronics components, the heat exchanger 5 may give off heat from the stator and/or the power electronics components. The airflow through the heat exchanger 5 may be radial or diagonal. To that end, the heat exchanger 5 may include radially or diagonally oriented airflow deflectors. The airflow deflectors allow air to stream from the second airflow duct A2 through the outer walls of cooling system portion 6 where the heat exchanger 5 is located. Diagonally running airflow may lead to fewer losses through flow deflection, but might be more complicated to manufacture.

The heat exchanger 5 is integrated into at least one ring segment of the cylindrical outer walls of the cooling system portion 6. This ring segment may span over about 360° of the cylindrical outer walls. Alternatively, there may be more than one ring segment, each ring segment spanning over only a portion of 360° of the cylindrical outer walls. It may also be possible to integrate a heat exchanger 5 in only parts of the outer walls, such as for example spanning about 90° of the cylindrical outer walls. Such configuration may be advantageous if there is additional need for installation space, for example for electric connections or pipework for the fluid pipes for the heat exchanger 5.

As shown in Fig. 1, 2 and 3, different airflow separation baffle members 9 may be located concentrically with the outer walls of the cooling system portion 6 within the cooling system portion 6. For example, in Fig. 2, the airflow separation baffle member 9 is located entirely within the cooling system portion 6. The airflow separation baffle member 9 allows forming an airflow ring between the outer surface of the airflow separation baffle member 9 and the inner surface of the outer walls of the cooling system portion 6, thereby guiding air streaming back from the air guide vanes 7 towards the inner surfaces of the heat exchanger 5. The airflow separation baffle member 9 aids in creating the necessary airflow velocity difference between the inner side and the outer side of the heat exchanger 5 to have air pass through the heat exchanger 5.

As illustrated in Fig. 1, the airflow separation baffle member 9 may also at least partially protrude into the hollow volume of the rotor 3. For example, the airflow separation baffle member 9 may enclose a liquid reservoir R that is configured to hold a heat transfer fluid for use in the heat exchanger 5. Also, the airflow separation baffle member 9 may enclose other pumping equipment for use with the heat exchanger 5.

The airflow separation baffle member 9 may also close off the back of the machine housing, as illustrated in Fig. 3, so that the rotor cooling air is forced through the heat exchanger 5 back to the second airflow duct A2. This may be advantageous if the rotor needs only little cooling and air radially entering the air inlet 8 is sufficiently cool after having cooled the rotor to cool the stator and/or power electronics components as well. Such a configuration may be favourable for wind turbines aiding in producing a more laminar and stable airflow at the back of the electric machine 1.

The airflow separation baffle member 9 may be coupled to supporting members 17, 18 at the back of the engine nacelle 16 to mechanically stabilize and support the machine housing within the nacelle 16.

The integrated cooling system equipment can be installed with or without shielding. Additional flow guides might help to improve air flow distribution and protect the cooling system equipment, particularly the heat exchanger 5, from the environment. In the case of encapsulated equipment, outside (colder, lower pressure) air could be routed to the cooling equipment for additional cooling. As the cooling system is located close to the electric machine 1, there is less need for extensive piping, thereby reducing weight of the electric machine 1 and balancing pressure distribution in the fluid pumping system of the heat exchanger 5. Also, the proximity of the liquid reservoir R as tank for heat exchanger fluid leads to less entrapped coolant volume, further reducing the necessary tank size and weight.

As any of the electric machines 1 as depicted in Fig. 1, 2 or 3 may be mounted as a unit in an engine nacelle 16, there is no need for breaking open or re-connecting the cooling circuit, therefore eliminating the danger of foreign object damage to the cooling customer. However, if required, the cooling system could be accessed from the rear, for example if required for on-wing maintenance in an electric propulsion system for an airborne vehicle.

Airflow by the fan 13 (or turbine 13) is not impeded by the installation of the cooling system. The electric machine 1 may be installed closely to the fan casing 15 so that cantilever forces are reduced substantially. The cooling system the components of which are generally lighter than components of the electric machine are shifted to the rear of the machine 1, thereby reducing dynamic forces even further.

In the foregoing detailed description, various features are grouped together in one or more examples or examples with the purpose of streamlining the disclosure. It is to be understood that the above description is intended to be illustrative, and not restrictive. The scope of the invention is defined by the appended claims.

Many other examples will be apparent to one skilled in the art upon reviewing the above specification. In particular, the embodiments and configurations described for the systems and aircraft infrastructure can be applied accordingly to the aircraft or spacecraft according to the invention and the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

## Claims

1. Electric machine (1) with an integrated cooling system, the electric machine (1) comprising: a stator portion (2), a hollow rotor (3) and a cooling system portion (6); the stator portion (2) at the front and the cooling system portion (6) at the back together being referred to as the cylindrical outer walls of the machine housing, the cooling system portion (6) lying axially adjacent to the stator portion (2); a rotor drive shaft (4) protruding coaxially with the cylindrical outer walls of the electric machine (1) from the front of the electric machine (1);
the hollow rotor (3) being coupled to the rotor drive shaft (4) and arranged coaxially within the stator portion (2) of the cylindrical outer walls of the machine housing;
at least one air inlet (8) formed in the cylindrical outer walls of the machine housing axially between the stator portion (2) and the cooling system portion (6); and
at least one partially tubular air guide vane (7) extending from the air inlet (8) into the hollow rotor (3), the at least one air guide vane (7) forming a cooling air duct for an airflow that can enter the air inlet (8), pass along a radially inner surface of the rotor (3) facing a radially outer surface of the air guide vane (7), reach an axial end of the air guide vane (8), turn by 180°, pass along a radially inner surface of the air guide vane (7) and flow back to a radially inner surface of the cooling system portion (6).

2. Electric machine (1) according to claim 1, further comprising:
a heat exchanger (5) integrated into the outer walls of the cooling system portion (6).

3. Electric machine (1) according to claim 2, wherein the heat exchanger (5) includes radially or diagonally oriented airflow deflectors, allowing air to stream through the outer walls of cooling system portion (6) in the location of the heat exchanger (5).

4. Electric machine (1) according to one of the claims 2 to 3, wherein the heat exchanger (5) is integrated into at least one ring segment of the cylindrical outer walls of the cooling system portion (6), the at least one ring segment spanning over between about 90° and about 360° of the cylindrical outer walls.

5. Electric machine (1) according to claim one of the claims 1 to 4, further including:
an airflow separation baffle member (9) located concentrically with the outer walls of the cooling system portion (6) within the cooling system portion (6), the airflow separation baffle member (9) forming an airflow ring between the outer surface of the airflow separation baffle member (9) and the inner surface of the outer walls of the cooling system portion (6).

6. Electric machine (1) according to claim 5, wherein the airflow separation baffle member (9) protrudes at least partially into the hollow rotor (3).

7. Electric machine (1) according to one of the claims 5 to 6, wherein the airflow separation baffle member (9) encloses a liquid reservoir (R) configured to hold a heat exchanger fluid.

8. Electric machine (1) according to one of the claims 1 to 7, wherein the machine housing includes an axial airflow outlet at the back of the cylindrical outer walls.

9. Electric propulsion system (10) for an airborne vehicle, the electric propulsion system (10) comprising:
an engine nacelle (16);
a propeller fan (11) installed in the engine nacelle (16);
an electric machine (1) according to one of the claims 1 to 8, the electric machine (1) being operable as an electric motor; and
a fan shaft (4) coupled to the propeller fan (11), the rotor drive shaft (4) of the electric machine (1) being connected to the fan shaft (4).

10. Electric propulsion system (10) according to claim 9, further comprising:
a core housing (15) installed within the engine nacelle (16), the core housing (15) forming a first airflow duct (A1) between the inner surface of the engine nacelle (16) and the outer surface of the core housing (15) and a second airflow duct (A2) between the inner surface of the core housing (15) and the outer surface of the machine housing of the electric machine (1).

11. Airborne vehicle, comprising an electric propulsion system (10) according to claim 9 or 10.

12. Electric energy generation system (10) for a wind turbine, the electric energy generation system (10) comprising:
an engine nacelle (16);
a turbine fan (11) installed in the engine nacelle (16);
an electric machine (1) according to one of the claims 1 to 8, the electric machine (1) being operable as an electric generator; and
a fan shaft (4) coupled to the turbine fan (12), the rotor drive shaft (4) of the electric machine (1) being connected to the fan shaft (4).

13. Electric energy generation system (10) according to claim 12, further comprising:
a core housing (15) installed within the engine nacelle (16), the core housing (15) forming a first airflow duct (A1) between the inner surface of the engine nacelle (16) and the outer surface of the core housing (15) and a second airflow duct (A2) between the inner surface of the core housing (15) and the outer surface of the machine housing of the electric machine (1).

## Patentansprüche

1. Elektrische Maschine (1) mit einem integrierten Kühlsystem, wobei die elektrische Maschine (1) Folgendes umfasst: einen Statorabschnitt (2), einen hohlen Rotor (3) und einen Kühlsystemabschnitt (6); wobei der Statorabschnitt (2) auf der Vorderseite und der Kühlsystemabschnitt (6) auf der Rückseite zusammen als die zylindrischen Außenwände des Maschinengehäuses bezeichnet werden,
wobei der Kühlsystemabschnitt (6) axial angrenzend an den Statorabschnitt (2) angeordnet ist;
wobei eine Rotorantriebswelle (4) koaxial mit den zylindrischen Außenwänden der elektrischen Maschine (1) von der Vorderseite der elektrischen Maschine (1) vorsteht;
wobei der hohle Rotor (3) mit der Rotorantriebswelle (4) gekoppelt ist und koaxial mit dem Statorabschnitt (2) der zylindrischen Außenwände des Maschinengehäuses angeordnet ist;
wobei wenigstens ein Lufteinlass (8) in den zylindrischen Außenwänden des Maschinengehäuses axial zwischen dem Statorabschnitt (2) und dem Kühlsystemabschnitt (6) ausgebildet ist; und
wobei sich wenigstens eine zum Teil rohrförmige Luftleitschaufel (7) vom Lufteinlass (8) in den hohlen Rotor (3) erstreckt, wobei die wenigstens eine Luftleitschaufel (7) einen Kühlluftkanal für eine Luftströmung bildet, die in den Lufteinlass (8) eintreten kann, längs einer radial innenliegenden Fläche des Rotors (3), die zu einer radial außenliegenden Fläche der Luftleitschaufel (7) zeigt, verlaufen kann, ein axiales Ende der Luftleitschaufel (8) erreichen kann, um 180° gewendet werden kann, längs einer radial innenliegenden Fläche der Luftleitschaufel (7) verlaufen kann und zu einer radial innenliegenden Fläche des Kühlsystemabschnitts (6) strömen kann.

2. Elektrische Maschine (1) nach Anspruch 1, die ferner Folgendes umfasst:
einen Wärmetauscher (5), der in die Außenwände des Kühlsystemabschnitts (6) integriert ist.

3. Elektrische Maschine (1) nach Anspruch 2, wobei der Wärmetauscher (5) radial oder diagonal orientierte Luftströmungsablenkelemente umfasst, damit Luft durch die Außenwände des Kühlsystemabschnitts (6) zur Position des Wärmetauschers (5) strömen kann.

4. Elektrische Maschine (1) nach einem der Ansprüche 2 bis 3, wobei der Wärmetauscher (5) in wenigstens ein Ringsegment der zylindrischen Außenwände des Kühlsystemabschnitts (6) integriert ist, wobei das wenigstens eine Ringsegment zwischen 90° und etwa 360° der zylindrischen Außenwände überspannt.

5. Elektrische Maschine (1) nach einem der Ansprüche 1 bis 4, die ferner Folgendes umfasst:
ein Umlenkelement (9) zum Trennen der Luftströmung, das konzentrisch mit den Außenwänden des Kühlsystemabschnitts (6) im Kühlsystemabschnitt (6) angeordnet ist, wobei das Umlenkelement (9) zum Trennen der Luftströmung einen Luftströmungsring zwischen der Außenfläche des Umlenkelements (9) zum Trennen der Luftströmung und der Innenfläche der Außenwände des Kühlsystemabschnitts (6) bildet.

6. Elektrische Maschine (1) nach Anspruch 5, wobei das Umlenkelement (9) zum Trennen der Luftströmung wenigstens teilweise in den hohlen Rotor (3) vorsteht.

7. Elektrische Maschine (1) nach einem der Ansprüche 5 bis 6, wobei das Umlenkelement (9) zum Trennen der Luftströmung einen Flüssigkeitsbehälter (R) umschließt, der konfiguriert ist, ein Wärmeaustauschfluid zu enthalten.

8. Elektrische Maschine (1) nach einem der Ansprüche 1 bis 7, wobei das Maschinengehäuse einen axialen Luftströmungsauslass auf der Rückseite der zylindrischen Außenwände umfasst.

9. Elektrisches Antriebssystem (10) für ein Flugzeug, wobei das elektrische Antriebssystem (10) Folgendes umfasst:
eine Maschinengondel (16);
ein Propellergebläse (11), das in der Maschinengondel (16) installiert ist;
eine elektrische Maschine (1) nach einem der Ansprüche 1 bis 8, wobei die elektrische Maschine (1) als Elektromotor betrieben werden kann; und
eine Gebläsewelle (4), die mit dem Propellergebläse (11) gekoppelt ist, wobei die Rotorantriebswelle (4) der elektrischen Maschine (1) mit der Gebläsewelle (4) verbunden ist.

10. Elektrisches Antriebssystem (10) nach Anspruch 9, das ferner Folgendes umfasst:
ein Kerngehäuse (15), das in der Maschinengondel (16) installiert ist, wobei das Kerngehäuse (15) einen ersten Luftströmungskanal (A1) zwischen der Innenfläche der Maschinengondel (16) und der Außenfläche des Kerngehäuses (15) und einen zweiten Luftströmungskanal (A2) zwischen der Innenfläche des Kerngehäuses (15) und der Außenfläche des Maschinengehäuses der elektrischen Maschine (1) bildet.

11. Flugzeug, das ein elektrisches Antriebssystem (10) nach Anspruch 9 oder 10 umfasst.

12. System (10) zum Erzeugen von elektrischer Energie für eine Windturbine, wobei das System (10) zum Erzeugen von elektrischer Energie Folgendes umfasst:
eine Maschinengondel (16);
ein Turbinengebläse (11), das in der Maschinengondel (16) installiert ist;
eine elektrische Maschine (1) nach einem der Ansprüche 1 bis 8, wobei die elektrische Maschine (1) als elektrischer Generator betrieben werden kann; und
eine Gebläsewelle (4), die mit dem Turbinengebläse (12) gekoppelt ist, wobei die Rotorantriebswelle (4) der elektrischen Maschine (1) mit der Gebläsewelle (4) verbunden ist.

13. System (10) zum Erzeugen von elektrischer Energie nach Anspruch 12, das ferner Folgendes umfasst:
ein Kerngehäuse (15), das in der Maschinengondel (16) installiert ist, wobei das Kerngehäuse (15) einen ersten Luftströmungskanal (A1) zwischen der Innenfläche der Maschinengondel (16) und der Außenfläche des Kerngehäuses (15) und einen zweiten Luftströmungskanal (A2) zwischen der Innenfläche des Kerngehäuses (15) und der Außenfläche des Maschinengehäuses der elektrischen Maschine (1) bildet.

## Revendications

1. Machine électrique (1) pourvue d'un système de refroidissement intégré, la machine électrique (1) comprenant : une partie stator (2), un rotor creux (3) et une partie système de refroidissement (6) ; la partie stator (2) à l'avant et la partie système de refroidissement (6) à l'arrière étant conjointement désignées comme les parois cylindriques extérieures du carter de machine,
la partie système de refroidissement (6) jouxtant axialement la partie stator (2) ;
un arbre d'entraînement de rotor (4) faisant saillie coaxialement avec les parois cylindriques extérieures de la machine électrique (1) depuis l'avant de la machine électrique (1) ;
le rotor creux (3) étant accouplé à l'arbre d'entraînement de rotor (4) et agencé coaxialement à l'intérieur de la partie stator (2) des parois cylindriques extérieures du carter de machine ;
au moins une entrée d'air (8) ménagée dans les parois cylindriques extérieures du carter de machine axialement entre la partie stator (2) et la partie système de refroidissement (6) ; et
au moins une aube directrice d'air partiellement tubulaire (7) s'étendant depuis l'entrée d'air (8) jusque dans le rotor creux (3), l'au moins une aube directrice d'air (7) formant un conduit d'air de refroidissement pour un écoulement d'air susceptible de pénétrer dans l'entrée d'air (8), passer le long d'une surface radialement intérieure du rotor (3) en regard d'une surface radialement extérieure de l'aube directrice d'air (7), parvenir à une extrémité axiale de l'aube directrice d'air (8), effectuer un virage à 180 degrés, passer le long d'une surface radialement intérieure de l'aube directrice d'air (7) et refluer jusqu'à une surface radialement intérieure de la partie système de refroidissement (6).

2. Machine électrique (1) selon la revendication 1, comprenant en outre :
un échangeur de chaleur (5) intégré dans les parois extérieures de la partie système de refroidissement (6).

3. Machine électrique (1) selon la revendication 2, dans laquelle l'échangeur de chaleur (5) comporte des déflecteurs d'écoulement d'air orientés radialement ou diagonalement, permettant à l'air de circuler en flux à travers les parois extérieures de la partie système de refroidissement (6) à l'endroit de l'échangeur de chaleur (5) .

4. Machine électrique (1) selon l'une des revendications 2 à 3, dans laquelle l'échangeur de chaleur (5) est intégré dans au moins un segment de couronne des parois cylindriques extérieures de la partie système de refroidissement (6), l'au moins un segment de couronne couvrant entre environ 90° et environ 360° des parois cylindriques extérieures.

5. Machine électrique (1) selon l'une des revendications 1 à 4, comportant en outre :
un organe formant chicane de séparation d'écoulement d'air (9) placé concentriquement avec les parois extérieures de la partie système de refroidissement (6) à l'intérieur de la partie système de refroidissement (6), l'organe formant chicane de séparation d'écoulement d'air (9) formant une couronne d'écoulement d'air entre la surface extérieure de l'organe formant chicane de séparation d'écoulement d'air (9) et la surface intérieure des parois extérieures de la partie système de refroidissement (6).

6. Machine électrique (1) selon la revendication 5, dans laquelle l'organe formant chicane de séparation d'écoulement d'air (9) fait saillie au moins partiellement jusque dans le rotor creux (3).

7. Machine électrique (1) selon l'une des revendications 5 à 6, dans laquelle l'organe formant chicane de séparation d'écoulement d'air (9) renferme un réservoir de liquide (R) configuré pour contenir un fluide d'échangeur de chaleur.

8. Machine électrique (1) selon l'une des revendications 1 à 7, dans laquelle le carter de machine comporte une sortie d'écoulement d'air axiale à l'arrière des parois cylindriques extérieures.

9. Système de propulsion électrique (10) pour un véhicule aérien, le système de propulsion électrique (10) comprenant :
une nacelle de moteur (16) ;
une soufflante d'hélice (11) montée dans la nacelle de moteur (16) ;
une machine électrique (1) selon l'une des revendications 1 à 8, la machine électrique (1) étant apte à fonctionner comme moteur électrique ; et
un arbre de soufflante (4) accouplé à la soufflante d'hélice (11), l'arbre d'entraînement de rotor (4) de la machine électrique (1) étant relié à l'arbre de soufflante (4) .

10. Système de propulsion électrique (10) selon la revendication 9, comprenant en outre :
un carter de noyau (15) monté à l'intérieur de la nacelle de moteur (16), le carter de noyau (15) formant un premier conduit d'écoulement d'air (A1) entre la surface intérieure de la nacelle de moteur (16) et la surface extérieure du carter de noyau (15) et un deuxième conduit d'écoulement d'air (A2) entre la surface intérieure du carter de noyau (15) et la surface extérieure du carter de machine de la machine électrique (1) .

11. Véhicule aérien, comprenant un système de propulsion électrique (10) selon la revendication 9 ou 10.

12. Système de génération d'énergie électrique (10) pour une turbine éolienne, le système de génération d'énergie électrique (10) comprenant :
une nacelle de moteur (16) ;
une soufflante de turbine (11) montée dans la nacelle de moteur (16) ;
une machine électrique (1) selon l'une des revendications 1 à 8, la machine électrique (1) étant apte à fonctionner comme générateur électrique ; et
un arbre de soufflante (4) accouplé à la soufflante de turbine (12), l'arbre d'entraînement de rotor (4) de la machine électrique (1) étant relié à l'arbre de soufflante (4) .

13. Système de génération d'énergie électrique (10) selon la revendication 12, comprenant en outre :
un carter de noyau (15) monté à l'intérieur de la nacelle de moteur (16), le carter de noyau (15) formant un premier conduit d'écoulement d'air (A1) entre la surface intérieure de la nacelle de moteur (16) et la surface extérieure du carter de noyau (15) et un deuxième conduit d'écoulement d'air (A2) entre la surface intérieure du carter de noyau (15) et la surface extérieure du carter de machine de la machine électrique (1) .
